(19) Europäisches Patentamt
European Patent Office
Office européen des brevets

(11) **EP 4 368 438 A1**

(12) **EUROPEAN PATENT APPLICATION**
published in accordance with Art. 153(4) EPC

(43) Date of publication:
**15.05.2024 Bulletin 2024/20**

(21) Application number: **22885507.8**

(22) Date of filing: **20.09.2022**

(51) International Patent Classification (IPC):
**B60L 3/00** $^{(2019.01)}$ **B60L 15/20** $^{(2006.01)}$

(86) International application number:
**PCT/CN2022/119913**

(87) International publication number:
**WO 2023/071620 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2021 CN 202111265185**

(71) Applicant: **China Faw Co., Ltd.**
**Changchun, Jilin 130011 (CN)**

(72) Inventors:
• **WU, Qinglong**
  **Changchun, Jilin 130011 (CN)**
• **YU, Changhong**
  **Changchun, Jilin 130011 (CN)**

(74) Representative: **Penza, Giancarlo**
**Bugnion S.p.A.**
**Viale Lancetti, 17**
**20158 Milano (IT)**

(54) **MOTOR WHEEL END TORQUE CAPABILITY DETERMINATION METHOD AND APPARATUS, ELECTRONIC DEVICE, AND STORAGE MEDIUM**

(57) A method and apparatus for determining a motor wheel end torque capacity, an electronic device and a storage medium are provided. The method includes: obtaining battery power of a battery, air conditioner power of an air conditioner, converter power of a converter, and motor reserved power of an electric motor in a drive system, and determining motor power of the electric motor based on the battery power, the air conditioner power, the converter power, the motor reserved power, and motor efficiency; determining an initial torque capacity of the electric motor based on a motor speed and the motor power of the electric motor, and determining a motor initial torque capacity of the drive system based on the initial torque capacity; and determining motor wheel end torque capacity of the drive system based on the motor initial torque capacity, a motor torque loss, a gearbox torque loss of the drive system, and a wheel end drive ratio of the drive system.

Battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency
⟶ S110

An initial torque capacity of the electric motor is determined based on a motor speed and the motor power of the electric motor, and a motor initial torque capacity of the drive system is determined based on the initial torque capacity
⟶ S120

Motor wheel end torque capacity of the drive system is determined based on the motor initial torque capacity, a motor torque loss, a gearbox torque loss of the drive system, and a wheel end drive ratio of the drive system
⟶ S130

Fig. 1

EP 4 368 438 A1

**Description**

The present disclosure claims priority to Chinese patent application No. 202111265185.5, filed with the Chinese Patent Office on October 28, 2021, the contents of which are hereby incorporated by reference in its entirety.

**Technical Field**

Examples of the present disclosure relate to the technical field of new energy vehicles, and in particular to a method and apparatus for determining a motor wheel end torque capacity, an electronic device and a storage medium.

**Background**

A pure electric vehicle is mainly powered by an electric drive system and a battery. With an electric motor powered by a power battery, a driving output capacity of the vehicle will be ensured, and energy of the vehicle will be efficiency recovered during stages of sliding and braking, thereby achieving goals of energy conservation and emission reduction.

However, during implementation of the present disclosure, an inventor discovered at least the following technical problem in the related art: power drive and energy recovery of the vehicle are tied to charging and discharging torque capacities of the electric motor of the drive system. If a torque capacity of the electric motor of the drive system cannot be accurately computed, a drive torque demand and an energy recovery torque of the vehicle cannot be accurately and reliably computed either. In view of that, it is necessary to provide a method for reliably and accurately computing a torque capacity of an electric motor of a drive system.

**Summary**

The present disclosure provides a method and apparatus for determining a motor wheel end torque capacity, an electronic device and a storage medium, so as to correct a torque capacity of an electric motor, and improve reliability of the motor wheel end torque capacity.

In a first aspect, an example of the present disclosure provides a method for determining a motor wheel end torque capacity. The method is applied to a pure electric drive system, and includes:

obtaining battery power of a battery, air conditioner power of an air conditioner, converter power of a converter, and motor reserved power of an electric motor in the drive system, and determining motor power of the electric motor based on the battery power, the air conditioner power, the converter power, the motor reserved power, and motor efficiency;

determining an initial torque capacity of the electric motor based on a motor speed and the motor power of the electric motor, and determining a motor initial torque capacity of the drive system based on the initial torque capacity; and

determining motor wheel end torque capacity of the drive system based on the motor initial torque capacity, a motor torque loss, a gearbox torque loss of the drive system, and a wheel end drive ratio of the drive system.

In a second aspect, an example of the present disclosure further provides an apparatus for determining a motor wheel end torque capacity. The apparatus includes:

a motor power determination module, configured to obtain battery power of a battery, air conditioner power of an air conditioner, converter power of a converter, and motor reserved power of the electric motor in the drive system, and determine motor power of the electric motor based on the battery power, the air conditioner power, the converter power, the motor reserved power, and motor efficiency;

a motor initial torque capacity determination module, configured to determine an initial torque capacity of the electric motor based on a motor speed and the motor power of the electric motor, and determine a motor initial torque capacity of the drive system based on the initial torque capacity; and

a motor wheel end torque capacity determination module, configured to determine the motor wheel end torque capacity of the drive system based on the motor initial torque capacity, a motor torque loss, a gearbox torque loss of the drive system, and a wheel end drive ratio of the drive system.

In a third aspect, an example of the present disclosure further provides an electronic device. The electronic device includes:

one or more processors; and

a storage apparatus, configured to store one or more programs, where

when the one or more programs are executed by the one or more processors, the one or more processors implement the method for determining a motor wheel end torque capacity provided in any example of the present disclosure.

In a fourth aspect, an example of the present disclosure further provides a computer-readable storage medium, storing a computer program, where the program implements the method for determining a motor wheel end torque capacity provided in any example of the present disclosure when executed by a processor.

## Brief Description of the Drawings

Fig. 1 is a schematic flow diagram of a method for determining a motor wheel end torque capacity according to an example of the present disclosure;

Fig. 2 is a schematic flow diagram of a method for determining a motor wheel end torque capacity according to another example of the present disclosure;

Fig. 3 is a schematic structural diagram of an apparatus for determining a motor wheel end torque capacity according to Example 3 of the present disclosure; and

Fig. 4 is a schematic structural diagram of an electronic device according to Example 4 of the present disclosure.

## Detailed Description of the Embodiments

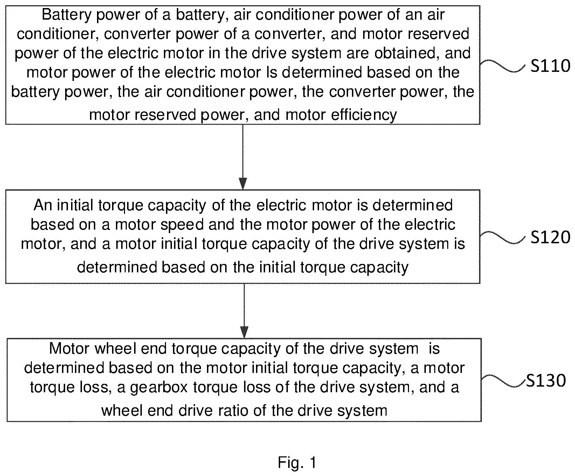

Fig. 1 is a schematic flow diagram of a method for determining a motor wheel end torque capacity according to the example of the present disclosure. The example is suitable for determining the motor wheel end torque capacity, and is more suitable for determining the motor wheel end torque capacity based on a motor torque loss. The method may be executed by an apparatus for determining a motor wheel end torque capacity. The apparatus may be implemented by software and/or hardware.

Before the technical solution of the example is introduced, an application scene of the technical solution of the example will be illustratively described. Specifically, the application scene includes:

A pure electric vehicle is mainly powered by an electric drive system and a battery. With an electric motor powered by a power battery, a driving output capacity of the vehicle will be ensured, and energy of the vehicle will be efficiency recovered during stages of sliding and braking, thereby achieving goals of energy conservation and emission reduction. Power drive and energy recovery of the vehicle are tied to charging and discharging torque capacities of the electric motor of the drive system. If a torque capacity of the electric motor of the drive system cannot be accurately computed, a drive torque demand and an energy recovery torque of the vehicle cannot be accurately and reliably computed either In view of that, how to accurately and effectively compute the torque capacity of the electric motor of the drive system is a key problem currently to be solved.

However, maximum torque output is computed in the related art mainly from considerations of two aspects of an electric motor and a battery, rather than considerations of power consumption of a direct current to direct current (DCDC) converter, consumption of an air conditioner, and a wheel end torque capacity; or maximum output torque of an electric motor is obtained from comparison between a motor capacity and a drive train torque capacity; or torque required by a vehicle is computed according to a current condition of the vehicle, torque required by an accelerator pedal, torque required by a brake pedal, creep torque, torque required by an electronic stability program (ESP), and a brake limit coefficient. However, whether the electric motor of a drive system may satisfy the required torque is not stated. That is, computation of a torque capacity of the electric motor of the drive system is not involved. Therefore, in an actual vehicle operation process, there is a difference between torque that the electric motor may output and rated output torque, and it is necessary to provide an efficient, reliable and accurate method for computing a torque capacity of an electric motor of a drive system.

The technical idea of the example of the present disclosure is to provide a method for computing a torque capacity of an electric motor of a drive system of a pure electric vehicle. According to characteristics of a power system of the pure electric vehicle, power output conditions of power assemblies of the electric motor of the drive system, a power battery pack, a DCDC converter, an air conditioner, etc., and a torque loss of the electric motor of the drive system are fully considered, and continuous charging and discharging torque capacities and peak charging and discharging torque capacities of the electric motor of the drive system may be efficiently computed, such that a true and reliable value of the torque capacity is provided for a driver torque requirement and energy recovery.

Based on the above technical idea, in the technical solutions of the examples of the present disclosure, battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency; more accurate motor power is determined based on sufficient consideration of operating power of various modules in the drive system; further, an initial torque capacity of the electric motor is determined based on a motor speed and the motor power of the electric motor, and a motor initial torque capacity of the drive system is determined based on the initial torque capacity; furthermore, a motor wheel end torque capacity of the drive system is determined based on the motor initial torque capacity, a motor torque loss, a gearbox torque loss of the drive system, and a wheel end drive ratio of the drive system; output torque of a wheel end of the electric motor of the drive system is effectively computed based on the torque loss and rated output torque of the electric motor of the drive system, such that reliability and accuracy of the torque capacity output by the electric motor of the drive system are improved.

As shown in Fig. 1, the technical solution of the example of the present disclosure specifically includes:

S110, battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency.

In the example of the present disclosure, the battery is a power battery pack that supplies power to the electric motor. Specifically, the battery may be a high-voltage battery located in the drive system, and the battery power may be power produced by the battery computed by a battery management system. The air conditioner may be an air conditioner module of a current electric vehicle, and the air conditioner power may be power consumed by the air conditioner during use computed by an air conditioner management system. The converter may be a DCDC converter, and the converter power may be power lost when current is converted. The motor reserved power may be a reserved value preset in order to prevent the electric motor from exceeding rated power, so as to normally use the electric motor.

In the example, the battery power of the battery includes battery continuous charging power, battery peak charging power, battery continuous discharging power, and battery peak discharging power. In the example, before the battery power is obtained, the method further includes: the battery management system determines a limit signal state of the battery, and outputs the battery power of the battery according to the limit signal state of the battery. Alternatively, with obtaining the battery continuous charging power and the battery peak discharging power in the battery power as an example, the battery management system determines a charging limit signal state of the battery, and determines the battery continuous charging power and the battery peak charging power of the battery according to the charging limit signal state.

Specifically, when the charging limit signal state of the battery is a triggered state, a value of the battery continuous charging power is 0; when the charging limit signal state of the battery is an untriggered state and a state of charge (SOC) of the battery is less than a, the battery continuous charging power is normally output; and when the charging limit signal state of the battery is an untriggered state and the SOC is greater than b, the battery continuous charging power is 0. a and b are both preset values, and a<b. For example, a=91%, and b=93%.

Specifically, when the charging limit signal state of the battery is a triggered state, an output value of the battery peak charging power is 0; when the charging limit signal state of the battery is an untriggered state and the SOC is less than c, the battery peak charging power is normally output; and when the charging limit signal state of the battery is an untriggered state and the SOC is greater than d, an output value of the battery peak charging power is 0. a, b, c and d are all preset values, and a<b<c<d. For example, c=94%, and b=96%.

Alternatively, with obtaining the battery continuous discharging power and the battery peak discharging power in the battery power as an example, a method for determining the battery power is introduced. The method specifically includes: the battery management system determines a discharging limit signal state of the battery, and determines the battery continuous discharging power and the battery peak discharging power of the battery according to the discharging limit signal state.

Specifically, when the discharging limit signal state of the battery is a triggered state, a value of the battery continuous discharging power is 0; when the discharging limit signal state of the battery is an untriggered state and the SOC is less than e, an output value of the battery continuous discharging power is 0; and when the discharging limit signal state of the battery is an untriggered state, and the SOC is greater than f, the battery continuous discharging power is normally output. e and f are both preset values, and e<f. For example, e=18%, and f=20%.

Specifically, when the discharging limit signal state of the battery is a triggered state, an output value of the battery peak discharging power is 0; when the discharging limit signal state of the battery is an untriggered state and the SOC is less than g, an output value of the battery peak discharging power is 0; and when the discharging limit signal state of the battery is an untriggered state, and the SOC is greater than h, the battery peak discharging power is normally output. e, f, g and h are all preset values, and g<h<e<f. For example, g=13%, and h=15%.

Further, the converter power of the converter in the example may be determined based on a converter management system, or DCDC high-pressure side electric power may be computed based on a voltage and current input by the converter. Specifically, a computation expression may be as follows:

$$P_{DCDCHV} = V_{DCDCIn} \times I_{DCDCIn}$$

where $P_{DCDCHV}$ represents the converter power, $V_{DCDCIn}$ represents the voltage input by the converter, and $I_{DCDCIn}$ represents the current input by the converter.

Further, the air conditioner power of the air conditioner in the example may be determined based on the air conditioner management system, or may be computed based on a voltage and current of the air conditioner.

Further, the motor reserved power is preset in order to ensure capabilities of the components in the example.

Further, the motor efficiency in the example may be obtained by looking up a motor efficiency MAP, a motor efficiency value is output, and it is ensured that power output is between maximum efficiency and minimum efficiency of the electric motor.

Specifically, after the battery power of the battery, the air conditioner power of the air conditioner, the converter power of the converter, and the motor reserved power of the electric motor in the drive system are obtained, the motor power of the electric motor is determined based on the battery power, the air conditioner power, the converter power, the motor reserved power and the motor efficiency.

The motor power in the example includes motor maximum continuous charging power, motor maximum peak charging power, maximum continuous discharging power and motor maximum peak discharging power.

Specifically, in response to the motor power including motor maximum continuous charging power, the step of determining motor power of the electric motor based on the battery power, the air conditioner power, the converter power, the motor reserved power, and motor efficiency correspondingly includes: the motor maximum continuous charging power of the electric motor is determined based on a product of battery continuous charging power in the battery power and a continuous charging power temperature correction coefficient, the air conditioner power, the converter power, motor maximum continuous charging reserved power in the motor reserved power, and the motor efficiency.

Illustratively, the motor maximum continuous charging power of the electric motor is determined based on the following equation:

$$P_{EMMaxContChrg} = \left( P_{ChrgCont} \times Q_{ChrgCont} + P_{ACElec} + P_{DCDCHV} - P_{MaxContCPResvrd} \right) \times E_{EMEffi},$$

where $P_{EMMaxContChrg}$ represents the motor maximum continuous charging power, $P_{chrgCont}$ represents the battery continuous charging power in the battery power, $Q_{ChrgCont}$ represents a continuous charging power temperature correction coefficient, $P_{ACElec}$ represents the air conditioner power, $P_{DCDCHV}$ represents the converter power, $P_{MaxContCPResvrd}$ represents the motor maximum continuous charging reserved power, and $E_{EMEffi}$ represents the motor efficiency.

Specifically, in response to the motor power including motor maximum peak charging power, the step of determining motor power of the electric motor based on the battery power, the air conditioner power, the converter power, the motor reserved power, and motor efficiency correspondingly includes: the motor maximum peak charging power of the electric motor is determined based on a product of battery peak charging power in the battery power and a peak charging power temperature correction coefficient, the air conditioner power, the converter power, motor maximum peak charging reserved power in the motor reserved power, and the motor efficiency;

Illustratively, the motor maximum peak charging power of the electric motor is determined based on the following equation:

$$P_{EMMaxPkChrg} = \left( P_{ChrgPk} \times Q_{ChrgPk} + P_{ACElec} + P_{DCDCHV} - P_{MaxPkCPResvrd} \right) \times E_{EMEffi},$$

where $P_{EMMaxPkChrg}$ represents the motor maximum peak charging power, $P_{ChrgPk}$ represents the battery peak charging power in the battery power, $Q_{ChrgPk}$ represents a peak charging power temperature correction coefficient, $P_{ACElec}$ represents the air conditioner power, $P_{DCDCHV}$ represents the converter power, $P_{MaxPkCPResvrd}$ represents the motor maximum peak charging reserved power, and $E_{EMEffi}$ represents the motor efficiency.

Specifically, in response to the motor power including motor maximum continuous discharging power, the step of determining motor power of the electric motor based on the battery power, the air conditioner power, the converter power, the motor reserved power, and motor efficiency correspondingly includes: the motor maximum continuous discharging power of the electric motor is determined based on a product of battery continuous discharging power in the battery power and a continuous discharging power temperature correction coefficient, the air conditioner power, the converter power, motor maximum continuous discharging reserved power in the motor reserved power, and the motor efficiency.

Illustratively, the motor maximum continuous discharging power of the electric motor is determined based on the following equation:

$$P_{EMMaxContDischrg} = (P_{DischrgCont} \times Q_{DisChrgCont} - P_{ACElec} - P_{DCDCHV} - P_{MaxContDPResvrd}) \times E_{EMEffi},$$

where $P_{EMMaXContDischrg}$ represents the motor maximum continuous discharging power, $P_{DischrgCont}$ represents the battery continuous discharging power in the battery power, $Q_{DisChrgCont}$ represents a continuous discharging power temperature correction coefficient, $P_{ACElec}$ represents the air conditioner power, $P_{DCDCHV}$ represents the converter power, $P_{MaxContDPResvrd}$ represents the motor maximum continuous discharging reserved power, and $E_{EMEffi}$ represents the motor efficiency.

Specifically, in response to the motor power including motor maximum peak discharging power, the step of determining motor power of the electric motor based on the battery power, the air conditioner power, the converter power, the motor reserved power, and motor efficiency correspondingly includes: the motor maximum peak discharging power of the electric motor is determined based on a product of battery peak discharging power in the battery power and a peak discharging power temperature correction coefficient, the air conditioner power, the converter power, motor maximum peak discharging reserved power in the motor reserved power, and the motor efficiency.

Illustratively, the motor maximum peak discharging power of the electric motor is determined based on the following equation:

$$P_{EMMaxPkDischrg} = (P_{DischrgPk} \times Q_{DisChrgPk} - P_{ACElec} - P_{DCDCHV} - P_{MaxPkDPResvrd}) \times E_{EMEffi},$$

where $P_{EMMaxPkDischrg}$ represents the motor maximum peak discharging power, $P_{DischrgPk}$ represents the battery peak discharging power in the battery power, $Q_{DisChrgPk}$ represents a peak discharging power temperature correction coefficient, $P_{ACElec}$ represents the air conditioner power, $P_{DCDCHV}$ represents the converter power, $P_{MaxPkDPResvrd}$ represents the motor maximum peak discharging reserved power, and $E_{EMEffi}$ represents the motor efficiency.

It should be noted that each motor reserved power is a preset value, and each motor power temperature correction coefficient may be obtained by looking up a current battery temperature MAP.

S120, an initial torque capacity of the electric motor is determined based on a motor speed and the motor power of the electric motor, and a motor initial torque capacity of the drive system is determined based on the initial torque capacity.

In the example, the initial torque capacity of the electric motor is rated motor torque determined based on a ratio of the motor power to the motor speed. Before the rated motor torque is determined, the motor speed is filtered, so as to output the motor speed between a maximum motor speed and a minimum motor speed, such that normal operation of the electric motor is ensured.

Alternatively, after the initial torque capacity of the electric motor is determined, or before the motor initial torque capacity of the drive system is determined based on the initial torque capacity, a motor maximum allowable torque capacity of the electric motor is determined, and the motor initial torque capacity of the drive system is determined based on a numerical comparison result of a drive train torque capacity, a motor external characteristic maximum torque capacity, the motor maximum allowable torque capacity and the initial torque capacity of the electric motor.

Specifically, a method for determining the motor maximum allowable torque capacity of the electric motor may include: a motor external characteristic maximum torque capacity of the electric motor is obtained, to separately determine a motor body maximum torque capacity corrected by a motor body temperature, a motor insulated gate bipolar transistor (IGBT) maximum torque capacity corrected by a motor IGBT temperature, and a motor bus voltage maximum torque capacity corrected by a motor bus voltage.

Specifically, the motor body maximum torque capacity corrected by the motor body temperature is determined based on a product of motor external characteristic maximum torque and a motor temperature correction coefficient; the motor IGBT maximum torque capacity corrected by the motor IGBT temperature is determined based on a product of the motor external characteristic maximum torque and an IGBT temperature correction coefficient; and the motor bus voltage maximum torque capacity corrected by the motor bus voltage is determined based on a product of the motor external characteristic maximum torque and a motor bus voltage correction coefficient. The motor maximum allowable torque capacity of the electric motor is further determined based on a numerical comparison result of the motor body maximum torque capacity, the motor IGBT maximum torque capacity, and the motor bus voltage maximum torque capacity. Illustratively, the smallest value of the motor body maximum torque capacity, the motor IGBT maximum torque capacity, and the motor bus voltage maximum torque capacity may be determined as the motor maximum allowable torque capacity $T_{TMMaxAvail}$.

In the example, the motor initial torque capacity of the drive system includes a motor initial maximum continuous charging torque capacity, a motor initial maximum peak charging torque capacity, a motor initial maximum continuous discharging torque capacity and a motor initial maximum peak discharging torque capacity.

Specifically, a method for determining the motor initial maximum continuous charging torque capacity in the motor initial torque capacity may include:

The motor initial maximum continuous charging torque capacity $T_{ContChrg}$ is determined based on a ratio of the motor maximum continuous charging power to the motor speed; the motor external characteristic maximum torque capacity $|T_{EMMax}|$ and the motor maximum allowable charging torque capacity $|T_{TMMaxAvailGenr}|$ are determined based on a MAP look-up result; and a gearbox input shaft limit value $T_{TransAvail}$ of the drive system is determined based on the MAP lookup result when the electric drive vehicle drives.

Further, the motor initial maximum continuous charging torque capacity is determined based on the initial maximum continuous charging torque capacity $T_{ContChrg}$, the motor external characteristic maximum torque capacity $|T_{EMMax}|$, the motor maximum allowable charging torque capacity $|T_{TMMaxAvailGenr}|$, and the gearbox input shaft limit value $T_{TransAvail}$. Specifically, the above 5 torque capacities may be maximized, and then negated as the motor initial maximum continuous charging torque capacity $T_{EMMaxContChrg}$. Illustratively, the motor initial maximum continuous charging torque capacity $T_{EMMaxContChrg}$ may be determined based on the following expression:

$$T_{EMMaxContChrg} = -\text{Max}(T_{ContChrg}, |T_{EMMax}|, |T_{TMMaxAvailGenr}|, T_{TMMaxAvail}, T_{TransAvail})$$

Specifically, a method for determining the motor initial maximum peak charging torque capacity in the motor initial torque capacity may include:

The motor initial maximum peak charging torque capacity $T_{PkChrg}$ is determined based on a ratio of the motor maximum peak charging power to the motor speed.

Further, the motor initial maximum peak charging torque capacity is determined based on the initial maximum peak charging torque capacity $T_{PkChrg}$, the motor external characteristic maximum torque capacity $|T_{EMMax}|$, the motor maximum allowable charging torque capacity $|T_{TMMaxAvailGenr}|$, and the gearbox input shaft limit value $T_{TransAvail}$. Specifically, the above 5 torque capacities may be maximized, and then negated as the motor initial maximum peak charging torque capacity $T_{EMMaxPkChrg}$. Illustratively, the motor initial maximum peak charging torque capacity $T_{EMMaxPkChrg}$ may be determined based on the following expression:

$$T_{EMMaxPkChrg} = -\text{Max}(T_{PkChrg}, |T_{EMMax}|, |T_{TMMaxAvailGenr}|, T_{TMMaxAvail}, T_{TransAvail})$$

Specifically, a method for determining the motor initial maximum continuous discharging torque capacity in the motor initial torque capacity may include:

The motor initial maximum continuous discharging torque capacity $T_{ContDischrg}$ is determined based on a ratio of the motor maximum continuous discharging power to the motor speed; and the motor maximum allowable discharging torque capacity $T_{TMMaxAvailMot}$ is determined based on an MAP lookup result.

Further, the motor initial maximum continuous discharging torque capacity is determined based on the initial maximum continuous discharging torque capacity $T_{ContDischrg}$, the motor external characteristic maximum torque capacity $|T_{EMMax}|$, the motor maximum allowable discharging torque capacity $T_{TMMaxAvailMot}$, and the gearbox input shaft limit value $T_{TransAvail}$. Specifically, the above 5 torque capacities may be minimized as the motor initial maximum continuous discharging torque capacity $T_{EMMaxContDischrg}$. Illustratively, the motor initial maximum continuous discharging torque capacity $T_{EMMaxContDischrg}$ may be determined based on the following expression:

$$T_{EMMaxContDisChrg} = \text{Min}(T_{ContDischrg}, T_{EMMax}, T_{TMMaxAvailMot}, T_{TMMaxAvail}, T_{TransAvail})$$

Specifically, a method for determining the motor initial maximum peak discharging torque capacity in the motor initial torque capacity may include:

the motor initial maximum peak discharging torque capacity $T_{PkDischrg}$ is determined based on a ratio of the motor maximum peak discharging power to the motor speed.

Further, the motor initial maximum peak discharging torque capacity is determined based on the initial maximum peak discharging torque capacity $T_{PkDischrg}$, the motor external characteristic maximum torque capacity $|T_{EMMax}|$, the motor maximum allowable discharging torque capacity $T_{TmmaxAvailmot}$, and the gearbox input shaft limit value $T_{TransAvail}$. Specifically, the above 5 torque capacities may be minimized as the motor initial maximum peak discharging torque capacity $T_{EMMaxPkDischrg}$ . Illustratively, the motor initial maximum peak discharging torque capacity $T_{EMMaxPkDischrg}$ may be determined based on the following expression:

$$T_{EMMaxPkDisChrg} = \text{Min}(T_{PkDischrg}, T_{EMMax}, T_{TMMaxAvailMot}, T_{TMMaxAvail}, T_{TransAvail})$$

S130, the motor wheel end torque capacity of the drive system is determined based on the motor initial torque capacity, a motor torque loss, a gearbox torque loss of the drive system, and a wheel end drive ratio of the drive system.

In the example of the present disclosure, after the motor initial torque capacity of the drive system is obtained, the motor torque loss of the electric motor is determined, and the motor wheel end torque capacity of the drive system is determined based on the motor initial torque capacity, the motor torque loss, the gearbox torque loss of the drive system, and the wheel end drive ratio of the drive system.

Alternatively, a method for determining the motor torque loss of the electric motor may include: motor maximum allowable power of the electric motor is determined based on a product of a motor maximum allowable torque capacity and the motor speed of the electric motor, and first motor loss power of the electric motor is determined based on a difference between the motor maximum allowable power and motor maximum peak discharging power; motor electric power and motor mechanical power of the electric motor are obtained, to determine second motor loss power of the electric motor based on a difference between the motor electric power and the motor mechanical power; motor loss power of the electric motor is determined based on a numerical comparison result of the first motor loss power and the second motor loss power; and a motor torque loss of the electric motor is determined based on a ratio of the motor loss power to the motor speed.

Alternatively, the motor maximum allowable power of the electric motor is determined based on a product of a motor maximum allowable torque capacity and the motor speed of the electric motor. Illustratively, the following equation may be used to determine the first motor loss power of the electric motor:

$$P_{EMPwrLoss1} = T_{TMMaxAvail} \times \frac{n_{TM}}{9549} - P_{EMMaxPkDischrg}$$

where $P_{EMPwrLoss1}$ represents the first motor loss power, $T_{TMMaxAvail}$ represents the motor maximum allowable torque capacity, and $P_{EMMaxPkDischrg}$ represents the motor maximum peak discharging power.

Specifically, a method for obtaining the motor electric power may include: the motor electric power is computed based on battery discharge and consumption of the DCDC converter and air conditioner. Illustratively, the motor electric power may be determined based on the following equation:

$$P_{TMEle} = V_{Bat} \times (I_{Bat} - I_{DCDCIn}) - P_{ACEle}$$

where $P_{TMEle}$ represents the motor electric power, $V_{Bat}$ represents a battery voltage, $I_{Bat}$ represents a battery current, $I_{DCDCIn}$ represents a current input by the DCDC converter, and $P_{ACEle}$ represents electric power of the air conditioner.

Specifically, a method for obtaining motor mechanical power may include: the motor mechanical power is computed according to motor torque and speed. Illustratively, the motor mechanical power may be determined based on the following equation:

$$P_{TMMech} = T_{TM} \times n_{TM}/9549$$

where $P_{TMMech}$ represents the motor mechanical power, $T_{TM}$ represents the motor torque capacity, and $n_{TM}$ represents the motor speed.

Alternatively, the second motor loss power of the electric motor is determined based on a difference between the motor electric power and the motor mechanical power. Illustratively, the second motor loss power of the electric motor is determined based on the following equation:

$$P_{EMPwrLoss} = P_{TMElec} - P_{TMMech}$$

where $P_{EMPwrLoss}$ represents the second motor loss power.

Alternatively, the motor loss power of the electric motor is determined based on a numerical comparison result of the first motor loss power and the second motor loss power. Specifically, a power loss having the greatest value may be determined as the motor power loss. Illustratively, the motor power loss is determined based on the following expression:

$$P_{EMPwrLoss} = Max \ (P_{EMPwrLoss1}, \ P_{EMPwrLoss2})$$

where $P_{EMPwrLoss}$ represents the motor power loss.

Further, the motor torque loss of the electric motor is determined based on a ratio of the motor loss power to the motor speed. Illustratively, the motor torque loss of the electric motor is determined based on the following expression:

$$T_{EMTorLoss} = \ (9549 \times P_{EMPwrLoss}) \ /n_{TM}$$

where $T_{EMTorLoss}$ represents the motor torque loss.

Further, the motor wheel end torque capacity of the drive system is determined based on the motor initial torque capacity, the motor torque loss, the gearbox torque loss of the drive system, and the wheel end drive ratio of the drive system.

Alternatively, in the example, the motor wheel end torque capacity includes a motor wheel end maximum continuous charging torque capacity, a motor wheel end maximum peak charging torque capacity, a motor wheel end maximum continuous discharging torque capacity, and a motor wheel end maximum peak discharging torque capacity.

Specifically, in response to the motor wheel end torque capacity including a motor wheel end maximum continuous charging torque capacity, the step of determining motor wheel end torque capacity of the drive system based on the motor initial torque capacity, a motor torque loss, a gearbox torque loss of the drive system, and a wheel end drive ratio of the drive system correspondingly includes: the motor wheel end maximum continuous charging torque capacity of the drive system is determined based on a motor initial maximum continuous charging torque capacity in the motor initial torque capacity, the motor torque loss, the gearbox torque loss of the drive system, and the wheel end drive ratio.

Illustratively, the motor wheel end maximum continuous charging torque capacity is determined based on the following equation:

$$-\left(\left|T_{EMMaxContChrg} + T_{EMTorLoss}\right| - T_{TranLoss}\right) \times i_{TranRatio},$$

where $T_{EMMaxContChrg}$ represents the motor initial maximum continuous charging torque capacity in the motor initial torque capacity, $T_{EMTorLoss}$ represents the motor torque loss, $T_{TranLoss}$ represents the gearbox torque loss, and $i_{TranRatio}$ represents the wheel end drive ratio.

Specifically, in response to the motor wheel end torque capacity including a motor wheel end maximum peak charging torque capacity, the step of determining motor wheel end torque capacity of the drive system based on the motor initial torque capacity, a motor torque loss, a gearbox torque loss of the drive system, and a wheel end drive ratio of the drive system correspondingly includes: the motor wheel end maximum peak charging torque capacity of the drive system is determined based on a motor initial maximum peak charging torque capacity in the motor initial torque capacity, the motor torque loss, the gearbox torque loss of the drive system, and the wheel end drive ratio.

Illustratively, the motor wheel end maximum continuous charging torque capacity is determined based on the following equation:

$$-\left(\left|T_{EMMaxPkChrg} + T_{EMTorLoss}\right| - T_{TranLoss}\right) \times i_{TranRatio},$$

where $T_{EMMaxPkChrg}$ represents the motor initial maximum peak charging torque capacity in the motor initial torque capacity, $T_{EMTorLoss}$ represents the motor torque loss, $T_{TranLoss}$ represents the gearbox torque loss, and $i_{TranRatio}$ represents the wheel end drive ratio.

Specifically, in response to the motor wheel end torque capacity including a motor wheel end maximum continuous discharging torque capacity, the step of determining the motor wheel end torque capacity of the drive system based on the motor initial torque capacity, a motor torque loss, a gearbox torque loss of the drive system, and a wheel end drive ratio of the drive system correspondingly includes: the motor wheel end maximum continuous discharging torque capacity of the drive system is determined based on a motor initial maximum continuous discharging torque capacity in the motor initial torque capacity, the motor torque loss, the gearbox torque loss of the drive system, and the wheel end drive ratio; and

Illustratively, the motor wheel end maximum continuous charging torque capacity is determined based on the following equation:

$$(T_{EMMaxContDischrg} + T_{EMTorLoss} - T_{TranLoss}) \times i_{TranRatio},$$

where $T_{EMMaXContDischrg}$ represents the motor initial maximum continuous discharging torque capacity in the motor initial torque capacity, $T_{EMTorLoss}$ represents the motor torque loss, $T_{TranLoss}$ represents the gearbox torque loss, and $i_{TranRatio}$ represents the wheel end drive ratio.

Specifically, in response to the motor wheel end torque capacity including a motor wheel end maximum peak discharging torque capacity,

the step of determining the motor wheel end torque capacity of the drive system based on the motor initial torque capacity, a motor torque loss, a gearbox torque loss of the drive system, and a wheel end drive ratio of the drive system correspondingly includes:

the motor wheel end maximum peak discharging torque capacity of the drive system is determined based on a motor initial maximum peak discharging torque capacity in the motor initial torque capacity, the motor torque loss, the gearbox torque loss of the drive system, and the wheel end drive ratio.

Illustratively, the motor wheel end maximum continuous charging torque capacity is determined based on the following equation:

$$(T_{EMMaxPkDischrg} + T_{EMTorLoss} - T_{TranLoss}) \times i_{TranRatio},$$

where $T_{EMMaxPkDischrg}$ represents the motor initial maximum peak discharging torque capacity in the motor initial torque capacity, $T_{EMTorLoss}$ represents the motor torque loss, $T_{TranLoss}$ represents the gearbox torque loss, and $i_{TranRatio}$ represents the wheel end drive ratio.

In the technical solutions of the examples of the present disclosure, the battery power of the battery, the air conditioner power of the air conditioner, the converter power of the converter, and the motor reserved power of the electric motor in the drive system are obtained, and the motor power of the electric motor is determined based on the battery power, the air conditioner power, the converter power, the motor reserved power and the motor efficiency; the more accurate motor power is determined based on sufficient consideration of operating power of various modules in the drive system; further, the initial torque capacity of the electric motor is determined based on the motor speed and the motor power of the electric motor, and the motor initial torque capacity of the drive system is determined based on the initial torque capacity; furthermore, the motor wheel end torque capacity of the drive system is determined based on the motor initial torque capacity, the motor torque loss, the gearbox torque loss of the drive system, and the wheel end drive ratio of the drive system; output torque of a wheel end of the electric motor of the drive system is effectively computed based on the torque loss and rated output torque of the electric motor of the drive system, such that reliability and accuracy of the torque capacity output by the electric motor of the drive system are improved.

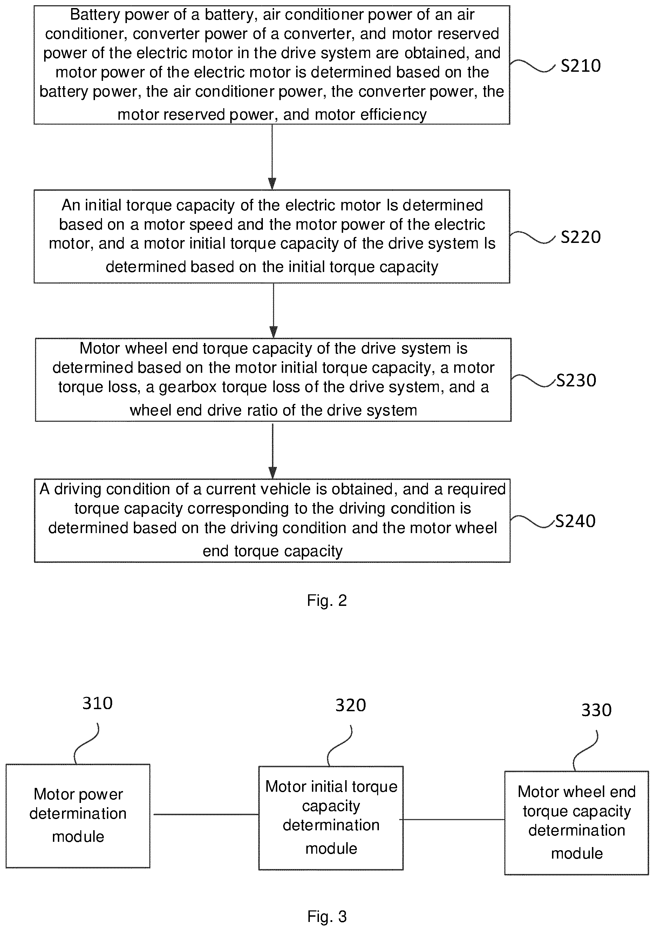

Fig. 2 is a schematic flow diagram of a method for determining a motor wheel end torque capacity according to another example of the present disclosure. Based on the above example, the example further adds the step "a driving condition of a current vehicle is obtained, and a required torque capacity corresponding to the driving condition is determined based on the driving condition and the motor wheel end torque capacity" after the step "motor wheel end torque capacity of the drive system is determined based on the motor initial torque capacity, a motor torque loss, a gearbox torque loss of the drive system, and a wheel end drive ratio of the drive system", where explanation of terms identical to or corresponding to the above examples will not be repeated herein. With reference to Fig. 2, a method for determining a motor wheel end torque capacity provided in the example includes:

S210, battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency;

S220, an initial torque capacity of the electric motor is determined based on a motor speed and the motor power of the electric motor, and a motor initial torque capacity of the drive system is determined based on the initial torque capacity;

S230, the motor wheel end torque capacity of the drive system is determined based on the motor initial torque capacity, a motor torque loss, a gearbox torque loss of the drive system, and a wheel end drive ratio of the drive system; and

S240, a driving condition of a current vehicle is obtained, and a required torque capacity corresponding to the driving condition is determined based on the driving condition and the motor wheel end torque capacity.

In the example, the driving condition of the vehicle may include emergency overtaking, emergency braking, normal driving, energy recovery, etc.

Specifically, when the vehicle is in the condition of normal driving and the condition of energy recovery, a vehicle controller reasonably uses continuous charging/discharging torque of the electric motor in combination the driving condition of the vehicle, to determine a required torque capacity corresponding to the current condition, so as to satisfy the driving condition of a user.

Specifically, when the vehicle is in the condition of overtaking and emergency braking, the vehicle controller reasonably uses peak charging/discharging torque of the electric motor in combination with the driving condition of the vehicle, to determine a required torque capacity corresponding to the current condition, so as to satisfy the driving condition of the user.

In the technical solution of the example, by means of the accurate and reliable torque capacity output by the electric motor of the drive system of the above example, and the condition of the vehicle, the required torque capacity corresponding to the condition is determined, such that a drive output capacity of the vehicle is ensured, and the vehicle may efficiently recovers energy, and finally achieves a goal of energy conservation and emission reduction.

An examples of an apparatus for determining a motor wheel end torque capacity provided in the example of the present disclosure is provided below, the apparatus belongs to the same inventive concept as the method for determining a motor wheel end torque capacity, and details that are not described in detail in the example of the apparatus for determining a motor wheel end torque capacity may refer to the example of the method for determining a motor wheel end torque capacity.

Fig. 3 is a schematic structural diagram of an apparatus for determining a motor wheel end torque capacity according to the example of the present disclosure. The example is suitable for determining the motor wheel end torque capacity, and is more suitable for determining the motor wheel end torque capacity based on a motor torque loss. The apparatus for determining a motor wheel end torque capacity specifically structurally includes: a motor power determination module 310, a motor initial torque capacity determination module 320 and a motor wheel end torque capacity determination module 330, where

the motor power determination module 310 is configured to obtain battery power of a battery, air conditioner power of an air conditioner, converter power of a converter, and motor reserved power of the electric motor in the drive system, and determine motor power of the electric motor based on the battery power, the air conditioner power, the converter power, the motor reserved power, and motor efficiency;

the motor initial torque capacity determination module 320 is configured to determine an initial torque capacity of the electric motor based on a motor speed and the motor power of the electric motor, and determine a motor initial torque capacity of the drive system based on the initial torque capacity; and

the motor wheel end torque capacity determination module 330 is configured to determine motor wheel end torque capacity of the drive system based on the motor initial torque capacity, a motor torque loss, a gearbox torque loss of the drive system, and a wheel end drive ratio of the drive system.

In the technical solution of the examples of the present disclosure, the battery power of the battery, the air conditioner power of the air conditioner, the converter power of the converter, and the motor reserved power of the electric motor in the drive system are obtained, and the motor power of the electric motor is determined based on the battery power, the air conditioner power, the converter power, the motor reserved power and the motor efficiency; the more accurate motor power is determined based on sufficient consideration of operating power of various modules in the drive system; further, the initial torque capacity of the electric motor is determined based on the motor speed and the motor power of the electric motor, and the motor initial torque capacity of the drive system is determined based on the initial torque capacity; furthermore, the motor wheel end torque capacity of the drive system is determined based on the motor initial torque capacity, the motor torque loss, the gearbox torque loss of the drive system, and the wheel end drive ratio of the drive system; output torque of a wheel end of the electric motor of the drive system is effectively computed based on the torque loss and rated output torque of the electric motor of the drive system, such that reliability and accuracy of the torque capacity output by the electric motor of the drive system are improved.

Based on the above examples, in response to the motor power including motor maximum continuous charging power,
the motor power determination module 310 correspondingly includes:

a motor maximum continuous charging power determination unit is configured to determine the motor maximum continuous charging power of the electric motor based on a product of battery continuous charging power in the battery power and a continuous charging power temperature correction coefficient, the air conditioner power, the converter power, motor maximum continuous charging reserved power in the motor reserved power, and the motor efficiency;

in response to the motor power including motor maximum peak charging power,

the motor power determination module 310 correspondingly includes:

a motor maximum peak charging power determination unit is configured to determine the motor maximum peak charging power of the electric motor based on a product of battery peak charging power in the battery power and a peak charging power temperature correction coefficient, the air conditioner power, the converter power, motor maximum peak charging reserved power in the motor reserved power, and the motor efficiency;

in response to the motor power including motor maximum continuous discharging power,

the motor power determination module 310 correspondingly includes:

a motor maximum continuous discharging power determination unit is configured to determine the motor maximum continuous discharging power of the electric motor based on a product of battery continuous discharging power in the battery power and a continuous discharging power temperature correction coefficient, the air conditioner power, the converter power, motor maximum continuous discharging reserved power in the motor reserved power, and the motor efficiency; and

in response to the motor power including motor maximum peak discharging power,

the motor power determination module 310 correspondingly includes:
a motor maximum peak discharging power determination unit is configured to determine the motor maximum peak discharging power of the electric motor based on a product of battery peak discharging power in the battery power and a peak discharging power temperature correction coefficient, the air conditioner power, the converter power, motor maximum peak discharging reserved power in the motor reserved power, and the motor efficiency.

Based on the above examples, the apparatus further includes:

a voltage maximum torque capacity determination unit is configured to obtain a motor external characteristic maximum torque capacity of the electric motor before a motor initial torque capacity of the drive system based on the initial torque capacity is determined, to separately determine a motor body maximum torque capacity corrected by a motor body temperature, a motor IGBT maximum torque capacity corrected by a motor IGBT temperature, and a motor bus voltage maximum torque capacity corrected by a motor bus voltage; and

a motor maximum allowable torque capacity determination unit is configured to determine a motor maximum allowable torque capacity of the electric motor based on a numerical comparison result of the motor body maximum torque capacity, the motor IGBT maximum torque capacity and the motor bus voltage maximum torque capacity.

Based on the above examples, the motor initial torque capacity determination module 320 includes:

an initial torque capacity determination unit is configured to determine the initial torque capacity of the electric motor based on a ratio of the motor power to the motor speed of the electric motor; and

a motor initial torque capacity determination unit is configured to determine the motor initial torque capacity of the drive system based on a numerical comparison result of a drive train torque capacity, a motor external characteristic maximum torque capacity, a motor maximum allowable torque capacity and the initial torque capacity of the electric motor.

Based on the above examples, the apparatus further includes:

a first motor loss power determination unit is configured to determine motor maximum allowable power of the electric motor based on a product of a motor maximum allowable torque capacity and the motor speed of the electric motor before the motor wheel end torque capacity of the drive system is determined, and determine first motor loss power of the electric motor based on a difference between the motor maximum allowable power and motor maximum peak discharging power;

a second motor loss power determination unit is configured to obtain motor electric power and motor mechanical power of the electric motor, to determine second motor loss power of the electric motor based on a difference between the motor electric power and the motor mechanical power;

a motor loss power determination unit is configured to determine motor loss power of the electric motor based on a numerical comparison result of the first motor loss power and the second motor loss power; and

a motor torque loss determination unit is configured to determine a motor torque loss of the electric motor based on a ratio of the motor loss power to the motor speed.

Based on the above examples, in response to the motor wheel end torque capacity including a motor wheel end maximum continuous charging torque capacity,
the motor wheel end torque capacity determination module 330 correspondingly includes:

a motor wheel end maximum continuous charging torque capacity determination unit is configured to determine the motor wheel end maximum continuous charging torque capacity of the drive system based on a motor initial maximum continuous charging torque capacity in the motor initial torque capacity, the motor torque loss, the gearbox torque loss of the drive system, and the wheel end drive ratio;

in response to the motor wheel end torque capacity including a motor wheel end maximum peak charging torque capacity,

the motor wheel end torque capacity determination module 330 correspondingly includes:

a motor wheel end maximum peak charging torque capacity determination unit is configured to determine the motor wheel end maximum peak charging torque capacity of the drive system based on a motor initial maximum peak charging torque capacity in the motor initial torque capacity, the motor torque loss, the gearbox torque loss of the drive system, and the wheel end drive ratio;

in response to the motor wheel end torque capacity including a motor wheel end maximum continuous discharging torque capacity,

the motor wheel end torque capacity determination module 330 correspondingly includes:

a motor wheel end maximum continuous discharging torque capacity determination unit is configured to determine the motor wheel end maximum continuous discharging torque capacity of the drive system based on a motor initial maximum continuous discharging torque capacity in the motor initial torque capacity, the motor torque loss, the gearbox torque loss of the drive system, and the wheel end drive ratio; and

in response to the motor wheel end torque capacity including a motor wheel end maximum peak discharging torque capacity,

the motor wheel end torque capacity determination module 330 correspondingly includes:
a motor wheel end maximum peak discharging torque capacity determination unit fis configured to determine the motor wheel end maximum peak discharging torque capacity of the drive system based on a motor initial maximum peak discharging torque capacity in the motor initial torque capacity, the motor torque loss, the gearbox torque loss of the drive system, and the wheel end drive ratio.

Based on the above examples, the apparatus further includes:
a required torque capacity determination unit is configured to obtain a driving condition of a current vehicle after the motor wheel end torque capacity of the drive system is determined, and determine a required torque capacity corresponding to the driving condition based on the driving condition and the motor wheel end torque capacity.

The apparatus for determining a motor wheel end torque capacity provided in the example of the present disclosure may execute the method for determining a motor wheel end torque capacity provided in any example of the present disclosure, and has functional modules and beneficial effects corresponding to execution of the method. It is worth noting that the units and the modules included in the above example of the apparatus for determining a motor wheel end torque capacity are merely divided according to a functional logic, but are not limited to the above division, as long as corresponding functions may be achieved. In addition, particular names of each functional unit are merely for convenience of mutual distinguishing, and are not used to limit the scope of the protection of the present disclosure.

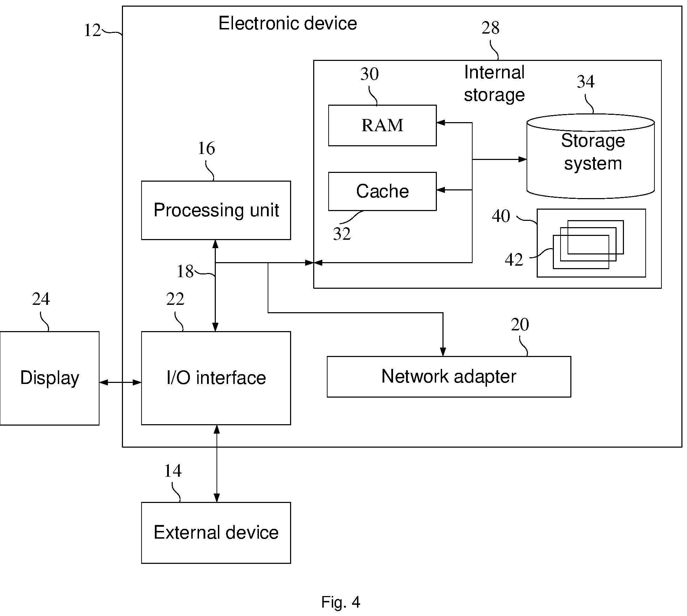

Fig. 4 is a schematic structural diagram of an electronic device according to the example of the present disclosure. Fig. 4 shows a block diagram of an illustrative electronic device 12 suitable of being applied to implementing embodiments of the present disclosure. The electronic device 12 shown in Fig. 4 is merely an example and should not limit functions and the scope of use of the example of the present disclosure in any way.

As shown in Fig. 4, the electronic device 12 is embodied in a form of a general-purpose computing electronic device. Assemblies of the electronic device 12 may include, but not limited to, one or more processors or processing units 16, a system memory 28, and a bus 18 that connects different system assemblies (including the system memory 28 and the processing unit 16).

The bus 18 represents one or more of several types of bus structures, including a memory bus or a memory controller, a peripheral bus, an accelerated graphics port, and the processor or a local bus using any of multiple bus structures. For example, the architectures include, but not limited to, an industry standard architecture (ISA) bus, a micro architecture channel (MAC) bus, an enhanced ISA bus, a video electronics standards association (VESA) local bus, and a peripheral component interconnect (PCI) bus.

The electronic device 12 typically includes multiple computer system readable media. The media may be any available media that may be accessed by the electronic device 12, and includes both volatile and non-volatile media, removable and non-removable media.

The system memory 28 may include the computer system readable media in a form of a volatile memory, such as a random access memory (RAM) 30 and/or cache memory 32. The electronic device 12 may further include other removable/non-removable, volatile/non-volatile computer system storage media. As an example only, a storage system 34 may be configured to read from and write to non-removable and non-volatile magnetic media (which is not shown in Fig. 4, and is generally called as a "hard drive"). Although the non-removable and non-volatile magnetic media are not shown in Fig. 4, a magnetic disk drive for reading from and writing to a removable and non-volatile magnetic disk (e.g., a "floppy disk"), and an optical disk drive for reading from and writing to the removable and non-volatile optical disk (such as a compact disc read-only memory (CD-ROM), digital video disk-read only memory (DVD-ROM) or other optical media) may be provided. In such cases, each driver may be connected to the bus 18 by means of one or more data medium interfaces. The system memory 28 may include at least one program product, where the program product has a set (e.g., at least one) of program modules that are configured to execute the functions of the examples of the present disclosure.

A program/utility 40 having a set (at least one) of program modules 42 may be stored in, e.g., the system memory 28. The program modules 42 includes, but not limited to, an operating system, one or more applications, other program modules, and program data, and each or some combination of the examples may include an implementation of a network environment. The program modules 42 generally execute the functions and/or methods of the examples described in the present disclosure.

The electronic device 12 may also communicate with one or more external devices 14 (e.g., a keyboard, a pointing device and a display 24), and may further communicate with one or more devices that enable a user to interact with the electronic device 12, and/or any devices (e.g., a network card and a modem) that enable the electronic device 12 to communicate with one or more other computing devices. Such communication may be carried out by means of an input/output (I/O) interface 22. Moreover, the electronic device 12 may further communicate with one or more networks (e.g., a local area network (LAN), a wide area network (WAN), and/or a public network, e.g., an Internet) by means of a network adapter 20. As shown in Fig. 4, the network adapter 20 communicates with other modules of the electronic device 12 by means of the bus 18. It should be understood that although the modules are not shown in Fig. 4, other hardware and/or software modules may be used in combination with the electronic device 12, including, but not limited to, a microcode, a device driver, a redundant processing unit, an external disk drive array, an redundant array of independent disks (RAID) system, a tape drive and a data backup storage system.

The processing unit 16 executes various functional applications and sample data acquisition by running programs stored in the system memory 28, to implement, e.g., steps of a method for determining a motor wheel end torque capacity according to the examples of the present disclosure. The method for determining a motor wheel end torque capacity includes:

battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency;

an initial torque capacity of the electric motor is determined based on a motor speed and the motor power of the electric motor, and a motor initial torque capacity of the drive system is determined based on the initial torque capacity; and

the motor wheel end torque capacity of the drive system is determined based on the motor initial torque capacity, a motor torque loss, a gearbox torque loss of the drive system, and a wheel end drive ratio of the drive system.

Certainly, those skilled in the art may understand that the processor may also implement the technical solution of the method for determining a motor wheel end torque capacity provided in any example of the present disclosure.

The example provides a computer-readable storage medium, storing a computer program, where the program implements steps of the method for determining a motor wheel end torque capacity according to any example of the present disclosure when executed by a processor. The method for determining a motor wheel end torque capacity includes:

battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency;

an initial torque capacity of the electric motor is determined based on a motor speed and the motor power of the electric motor, and a motor initial torque capacity of the drive system is determined based on the initial torque capacity; and

motor wheel end torque capacity of the drive system is determined based on the motor initial torque capacity, a motor torque loss, a gearbox torque loss of the drive system, and a wheel end drive ratio of the drive system.

The computer-readable storage medium of the example of the present disclosure may use any combination of one or more computer-readable media. The computer-readable medium may be a computer-readable signal medium or computer-readable storage medium. The computer-readable storage medium may include, but not limited to, an electronic, magnetic, optical, electromagnetic, infrared, or semiconductor system, apparatus, or device, or any combination of the above. More specific examples (non-exhaustive list) of the computer-readable storage medium include: an electrical connection having one or more wires, a portable computer disk, a hard disk, a RAM, a ROM, an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that includes or stores a program that may be used by an instruction execution system, apparatus, or device or in combination with the instruction execution system, apparatus, or device.

The computer-readable signal medium may include data signals propagating in a baseband or as part of a carrier wave, which carry computer-readable program codes. The data signals propagating may take various forms, including, but not limited to, electromagnetic signals, optical signals, or any suitable combination of the above. The computer-readable signal medium may further be any computer-readable medium apart from a computer-readable storage medium, and the computer-readable medium may send, propagate, or transmit programs used by the instruction execution system, apparatus, or device or in combination with the instruction execution system, apparatus, or device.

Program codes included on the computer-readable medium may be transmitted by using any suitable medium, including, but not limited to, wireless, wire, optical cable, radio frequency (RF), etc., or any suitable combination of the above.

Computer program codes for executing operations of the present disclosure may be written in one or more programming languages or a combination of the programming languages. The programming languages include object-oriented programming languages such as Java, Smalltalk and C++, and further include conventional procedural programming languages such as "C" programming language or similar programming languages. The program codes may be executed entirely on a user computer, executed partially on the user computer, executed as a stand-alone software package, executed partially on the user computer and partially on a remote computer, or executed entirely on a remote computer or a server. Where the remote computer is involved, the remote computer may be connected to the user computer by means of any kind of network, including the LAN or the WAN, or may be connected to an external computer (for example, the remote computer is connected by means of the Internet by an Internet service provider).

Obviously, those of ordinary skill in the art should understand that the modules or steps of the present disclosure mentioned above may be implemented with a general-purpose computing apparatus, and may be centralized on a single computing apparatus or distributed on a network consisting of a plurality of computing apparatuses. Alternatively, the modules or steps may be implemented with program codes executable by the computing apparatus, such that the modules or steps may be stored in a storage apparatus to be executed by the computing apparatus, or the modules or steps may be fabricated separately as individual integrated circuit modules, or multiple modules or steps in the modules or steps may be fabricated as a single integrated circuit module for implementation. Thus, the present disclosure is not limited to any particular combination of hardware and software.

It should be noted that what are described above are merely preferred examples of the present disclosure and an applied technical principle. Those skilled in the art may understand that the present disclosure is not limited to a specific example described herein, and can make various obvious changes, readjustments and substitutions without departing from the scope of protection of the present disclosure. Therefore, although the present disclosure has been described relatively in detail by means of the above examples, the present disclosure is not merely limited to the above examples, but may also include more other equivalent examples without departing from the concept of the present disclosure, and the scope of the present disclosure is determined by the scope of the appended claims.

## Claims

1.  A method for determining a motor wheel end torque capacity, applied to a pure electric drive system, and comprising:

    obtaining battery power of a battery, air conditioner power of an air conditioner, converter power of a converter, and motor reserved power of an electric motor in the drive system, and determining motor power of the electric motor based on the battery power, the air conditioner power, the converter power, the motor reserved power, and motor efficiency;
    determining an initial torque capacity of the electric motor based on a motor speed and the motor power of the electric motor, and determining a motor initial torque capacity of the drive system based on the initial torque capacity; and
    determining motor wheel end torque capacity of the drive system based on the motor initial torque capacity, a motor torque loss, a gearbox torque loss of the drive system, and a wheel end drive ratio of the drive system.

2.  The method as claimed in claim 1, wherein in response to the motor power comprising motor maximum continuous charging power,
    the determining motor power of the electric motor based on the battery power, the air conditioner power, the converter power, the motor reserved power, and motor efficiency comprises:

    determining the motor maximum continuous charging power of the electric motor based on a product of battery continuous charging power in the battery power and a continuous charging power temperature correction coefficient, the air conditioner power, the converter power, motor maximum continuous charging reserved power in the motor reserved power, and the motor efficiency;
    in response to the motor power comprising motor maximum peak charging power,
    the determining motor power of the electric motor based on the battery power, the air conditioner power, the converter power, the motor reserved power, and motor efficiency comprises:

    determining the motor maximum peak charging power of the electric motor based on a product of battery peak charging power in the battery power and a peak charging power temperature correction coefficient, the air conditioner power, the converter power, motor maximum peak charging reserved power in the motor reserved power, and the motor efficiency;
    in response to the motor power comprising motor maximum continuous discharging power,
    the determining motor power of the electric motor based on the battery power, the air conditioner power, the converter power, the motor reserved power, and motor efficiency comprises:

determining the motor maximum continuous discharging power of the electric motor based on a product of battery continuous discharging power in the battery power and a continuous discharging power temperature correction coefficient, the air conditioner power, the converter power, motor maximum continuous discharging reserved power in the motor reserved power, and the motor efficiency; and
in response to the motor power comprising motor maximum peak discharging power,
the determining motor power of the electric motor based on the battery power, the air conditioner power, the converter power, the motor reserved power, and motor efficiency comprises:
determining the motor maximum peak discharging power of the electric motor based on a product of battery peak discharging power in the battery power and a peak discharging power temperature correction coefficient, the air conditioner power, the converter power, motor maximum peak discharging reserved power in the motor reserved power, and the motor efficiency.

3. The method as claimed in claim 1, wherein before the determining a motor initial torque capacity of the drive system based on the initial torque capacity, the method further comprises:

obtaining a motor external characteristic maximum torque capacity of the electric motor, to separately determine a motor body maximum torque capacity corrected by a motor body temperature, a motor insulated gate bipolar transistor (IGBT) maximum torque capacity corrected by a motor IGBT temperature, and a motor bus voltage maximum torque capacity corrected by a motor bus voltage; and
determining a motor maximum allowable torque capacity of the electric motor based on a numerical comparison result of the motor body maximum torque capacity, the motor IGBT maximum torque capacity and the motor bus voltage maximum torque capacity.

4. The method as claimed in claim 1, wherein the determining an initial torque capacity of the electric motor based on a motor speed and the motor power of the electric motor, and determining a motor initial torque capacity of the drive system based on the initial torque capacity comprises:

determining the initial torque capacity of the electric motor based on a ratio of the motor power to the motor speed of the electric motor; and
determining the motor initial torque capacity of the drive system based on a numerical comparison result of a drive train torque capacity, a motor external characteristic maximum torque capacity, a motor maximum allowable torque capacity and the initial torque capacity of the electric motor.

5. The method as claimed in claim 1, wherein before the determining the motor wheel end torque capacity of the drive system, the method further comprises:

determining motor maximum allowable power of the electric motor based on a product of a motor maximum allowable torque capacity and the motor speed of the electric motor, and determining first motor loss power of the electric motor based on a difference between the motor maximum allowable power and motor maximum peak discharging power;
obtaining motor electric power and motor mechanical power of the electric motor, to determine second motor loss power of the electric motor based on a difference between the motor electric power and the motor mechanical power;
determining motor loss power of the electric motor based on a numerical comparison result of the first motor loss power and the second motor loss power; and
determining a the motor torque loss of the electric motor based on a ratio of the motor loss power to the motor speed.

6. The method as claimed in claim 1, wherein in response to the motor wheel end torque capacity comprising a motor wheel end maximum continuous charging torque capacity,
the determining the motor wheel end torque capacity of the drive system based on the motor initial torque capacity, a motor torque loss, a gearbox torque loss of the drive system, and a wheel end drive ratio of the drive system comprises:

determining the motor wheel end maximum continuous charging torque capacity of the drive system based on a motor initial maximum continuous charging torque capacity in the motor initial torque capacity, the motor torque loss, the gearbox torque loss of the drive system, and the wheel end drive ratio;
in response to the motor wheel end torque capacity comprising a motor wheel end maximum peak charging torque capacity,
the determining motor wheel end torque capacity of the drive system based on the motor initial torque capacity, a motor torque loss, a gearbox torque loss of the drive system, and a wheel end drive ratio of the drive system comprises:

determining the motor wheel end maximum peak charging torque capacity of the drive system based on a motor initial maximum peak charging torque capacity in the motor initial torque capacity, the motor torque loss, the gearbox torque loss of the drive system, and the wheel end drive ratio;
in response to the motor wheel end torque capacity comprising a motor wheel end maximum continuous discharging torque capacity,
the determining motor wheel end torque capacity of the drive system based on the motor initial torque capacity, a motor torque loss, a gearbox torque loss of the drive system, and a wheel end drive ratio of the drive system comprises:

determining the motor wheel end maximum continuous discharging torque capacity of the drive system based on a motor initial maximum continuous discharging torque capacity in the motor initial torque capacity, the motor torque loss, the gearbox torque loss of the drive system, and the wheel end drive ratio; and
in response to the motor wheel end torque capacity comprising a motor wheel end maximum peak discharging torque capacity,
the determining motor wheel end torque capacity of the drive system based on the motor initial torque capacity, a motor torque loss, a gearbox torque loss of the drive system, and a wheel end drive ratio of the drive system comprises:
determining the motor wheel end maximum peak discharging torque capacity of the drive system based on a motor initial maximum peak discharging torque capacity in the motor initial torque capacity, the motor torque loss, the gearbox torque loss of the drive system, and the wheel end drive ratio.

7. The method as claimed in claim 1, wherein after the determining the motor wheel end torque capacity of the drive system, the method further comprises:
obtaining a driving condition of a current vehicle, and determining a required torque capacity corresponding to the driving condition based on the driving condition and the motor wheel end torque capacity.

8. An apparatus for determining a motor wheel end torque capacity, comprising:

a motor power determination module, configured to obtain battery power of a battery, air conditioner power of an air conditioner, converter power of a converter, and motor reserved power of the electric motor in the drive system, and determine motor power of the electric motor based on the battery power, the air conditioner power, the converter power, the motor reserved power, and motor efficiency;
a motor initial torque capacity determination module, configured to determine an initial torque capacity of the electric motor based on a motor speed and the motor power of the electric motor, and determine a motor initial torque capacity of the drive system based on the initial torque capacity; and
a motor wheel end torque capacity determination module, configured to determine motor wheel end torque capacity of the drive system based on the motor initial torque capacity, a motor torque loss, a gearbox torque loss of the drive system, and a wheel end drive ratio of the drive system.

9. An electronic device, comprising:

one or more processors; and
a storage apparatus, configured to store one or more programs, wherein
when the one or more programs are executed by the one or more processors, the one or more processors implement the method for determining a motor wheel end torque capacity of any one of claims 1-7.

10. A computer-readable storage medium, storing a computer program, wherein the program implements the method for determining a motor wheel end torque capacity of any one of claims 1-7 when executed by a processor.

Battery power of a battery, air conditioner power of an air conditioner, converter power of a converter, and motor reserved power of the electric motor in the drive system are obtained, and motor power of the electric motor Is determined based on the battery power, the air conditioner power, the converter power, the motor reserved power, and motor efficiency ⟶ S110

An initial torque capacity of the electric motor is determined based on a motor speed and the motor power of the electric motor, and a motor initial torque capacity of the drive system is determined based on the initial torque capacity ⟶ S120

Motor wheel end torque capacity of the drive system is determined based on the motor initial torque capacity, a motor torque loss, a gearbox torque loss of the drive system, and a wheel end drive ratio of the drive system ⟶ S130

Fig. 1

Battery power of a battery, air conditioner power of an air conditioner, converter power of a converter, and motor reserved power of the electric motor in the drive system are obtained, and motor power of the electric motor is determined based on the battery power, the air conditioner power, the converter power, the motor reserved power, and motor efficiency — S210

An initial torque capacity of the electric motor Is determined based on a motor speed and the motor power of the electric motor, and a motor initial torque capacity of the drive system Is determined based on the initial torque capacity — S220

Motor wheel end torque capacity of the drive system is determined based on the motor initial torque capacity, a motor torque loss, a gearbox torque loss of the drive system, and a wheel end drive ratio of the drive system — S230

A driving condition of a current vehicle is obtained, and a required torque capacity corresponding to the driving condition is determined based on the driving condition and the motor wheel end torque capacity — S240

Fig. 2

310

320

330

| Motor power determination module | Motor initial torque capacity determination module | Motor wheel end torque capacity determination module |

Fig. 3

Electronic device

12

28 Internal storage

30

RAM

34

Storage system

16

Cache

32

Processing unit

40

42

18

24

22

20

Display

I/O interface

Network adapter

14

External device

Fig. 4

## INTERNATIONAL SEARCH REPORT

| International application No. |
| --- |
| **PCT/CN2022/119913** |

| A. | CLASSIFICATION OF SUBJECT MATTER |
| --- | --- |
| | B60L 3/00(2019.01)i; B60L 15/20(2006.01)i |

According to International Patent Classification (IPC) or to both national classification and IPC

| B. | FIELDS SEARCHED |
| --- | --- |

Minimum documentation searched (classification system followed by classification symbols)
    B60L, B60W, B60K

Documentation searched other than minimum documentation to the extent that such documents are included in the fields searched

Electronic data base consulted during the international search (name of data base and, where practicable, search terms used)
    CNTXT, CNKI, WPABS, DWPI: 电动汽车, 电机, 轮端, 扭矩, 电池, 功率, 空调, 转换器; electric+, vehicle, motor, wheel end torque, battery, power, air conditioner, converter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113954639 A (CHINA FAW CO., LTD.) 21 January 2022 (2022-01-21) <br> entire document | 1-10 |
| A | CN 112622644 A (EVERGRANDE NEW ENERGY AUTOMOBILE INVESTMENT HOLDING GROUP CO., LTD.) 09 April 2021 (2021-04-09) <br> description, paragraphs 0029-00119, and figures 1-3 | 1-10 |
| A | KR 20140051681 A (HYUNDAI MOBIS CO., LTD.) 02 May 2014 (2014-05-02) <br> entire document | 1-10 |
| A | CN 111546904 A (CHINA FAW CO., LTD.) 18 August 2020 (2020-08-18) <br> entire document | 1-10 |
| A | US 2014128217 A1 (TABATA ATSUSHI et al.) 08 May 2014 (2014-05-08) <br> entire document | 1-10 |
| A | CN 111645537 A (EVERGRANDE HENGCHI NEW ENERGY AUTOMOBILE RESEARCH INSTITUTE (SHANGHAI) CO., LTD.) 11 September 2020 (2020-09-11) <br> entire document | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 October 2022** | **17 November 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/119913**

| Patent document cited in search report | | | Publication date (day/month/year) | Patent family member(s) | | | Publication date (day/month/year) |
|---|---|---|---|---|---|---|---|
| CN | 113954639 | A | 21 January 2022 | None | | | |
| CN | 112622644 | A | 09 April 2021 | None | | | |
| KR | 20140051681 | A | 02 May 2014 | None | | | |
| CN | 111546904 | A | 18 August 2020 | None | | | |
| US | 2014128217 | A1 | 08 May 2014 | EP | 2727789 | A1 | 07 May 2014 |
| | | | | WO | 2013001616 | A1 | 03 January 2013 |
| | | | | CN | 103619681 | A | 05 March 2014 |
| | | | | JP | WO2013001616 | A1 | 23 February 2015 |
| CN | 111645537 | A | 11 September 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111265185